# EUROPEAN PATENT SPECIFICATION

(11) **EP 0 822 853 B1**
(45) Date of publication and mention of the grant of the patent: **18.07.2001**
(21) Application number: 96915012.7
(22) Date of filing: 26.04.1996
(51) Int. Cl.: B01D 33/03, E21B 21/06

(54) **SHALE SHAKER**
SCHIEFERSCHÜTLER
TAMIS VIBRANT

(30) Priority: 26.04.1995 US 430933
(43) Date of publication of application: 11.02.1998
(60) Divisional application: 00204008.7
(73) Proprietor: Tuboscope I/P Inc., Houston, TX 77051 (US)
(72) Inventor: SEYFFERT, Kenneth, W., Houston, TX 77018 (US)
(74) Representative: Lucas, Brian Ronald
(86) International application number: PCT/EP96/01835
(87) International publication number: WO 96/33792

(56) References cited:
- GB-A- 832 041
- GB-A- 2 085 744
- US-A- 2 439 543
- US-A- 5 392 925

## Description

The present invention relates to an assembly for vibrating screens.

During the drilling of oil and gas wells drilling mud, which is typically a mixture of clay, water and various additives, is pumped down a hollow drill string and exits through holes in a drillbit. The mud picks up rock cuttings and other solids from the well and carries them to the surface in the space between the wall of the well and the drill string. At the top of the well, the solids-laden drilling mud is introduced into a shale shaker which separates the solids from the drilling mud which is reused.

Assemblies for vibrating screens usually known as shale shakers generally comprise a basket containing a plurality of screens arranged in a single plane. In use, the baskets are vibrated to facilitate the recovery of the drilling fluid.

Whilst most shale shakers work acceptably under their design loading problems arise when the supply surges, i.e. there is a temporary increase in the flow or the drilling mud temporarily contains an excess of solids.

During surges drilling mud often flows over the screens and leaves the shale shaker with the solids. This results in a loss of the drilling mud which is expensive.

In order to help reduce this problem the present invention provides an assembly for vibrating screens, the assembly comprising a base, a basket mounted on said base and movable with respect thereto, apparatus for vibrating said basket, a sump below the basket, an upper screen support and a lower screen support wherein a portion of the lower screen support underlies the upper screen support, characterised in that a flow back pan is disposed between the upper screen support and the lower screen support so that, in use, an upper screen mounted on said upper screen support discharges on to a lower screen mounted on said lower screen support whilst said flow back pan prevents material which passes through the upper screen from contacting the lower screen and directs said material into said sump.

Other features are set out in Claim 2 et seq.

For a better understanding of the invention reference will now be made, by way of example, to the accompanying drawings, in which:-
Fig. 1 is a perspective end view of one embodiment of a shale shaker in accordance with the present invention without screens;
Fig. 2 is another perspective end view of the shale shaker of Fig. 1;
Fig. 3 is a schematic side view, in cross-section, of the shale shaker shown in Fig. 1 but fitted with screens;
Fig. 4 is a view taken on line IV-IV of Fig. 3 with parts omitted for clarity; and
Fig. 5 is a top view of the shale shaker of Fig. 1 with parts omitted for clarity.

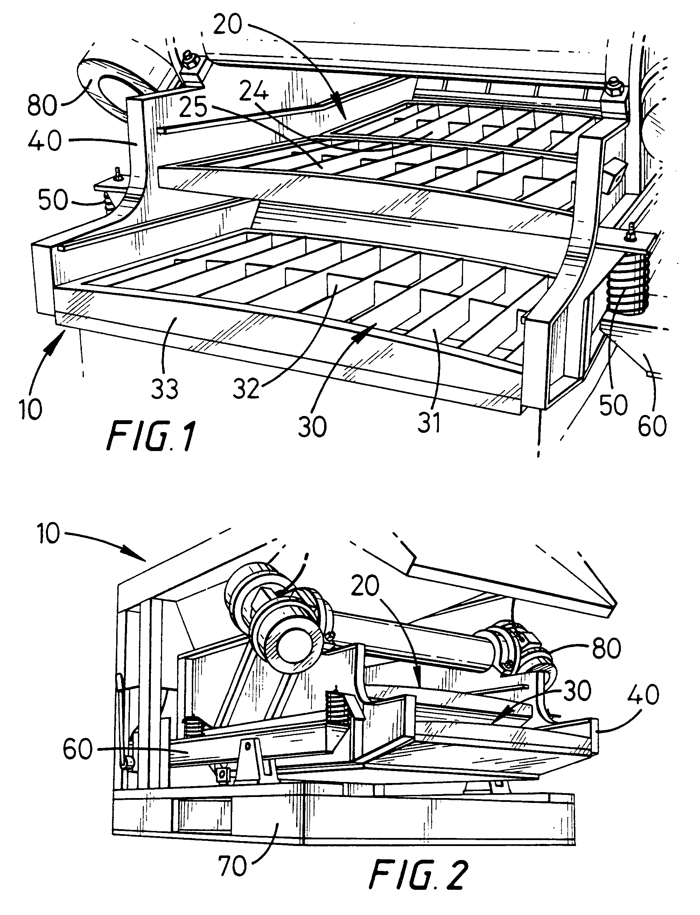

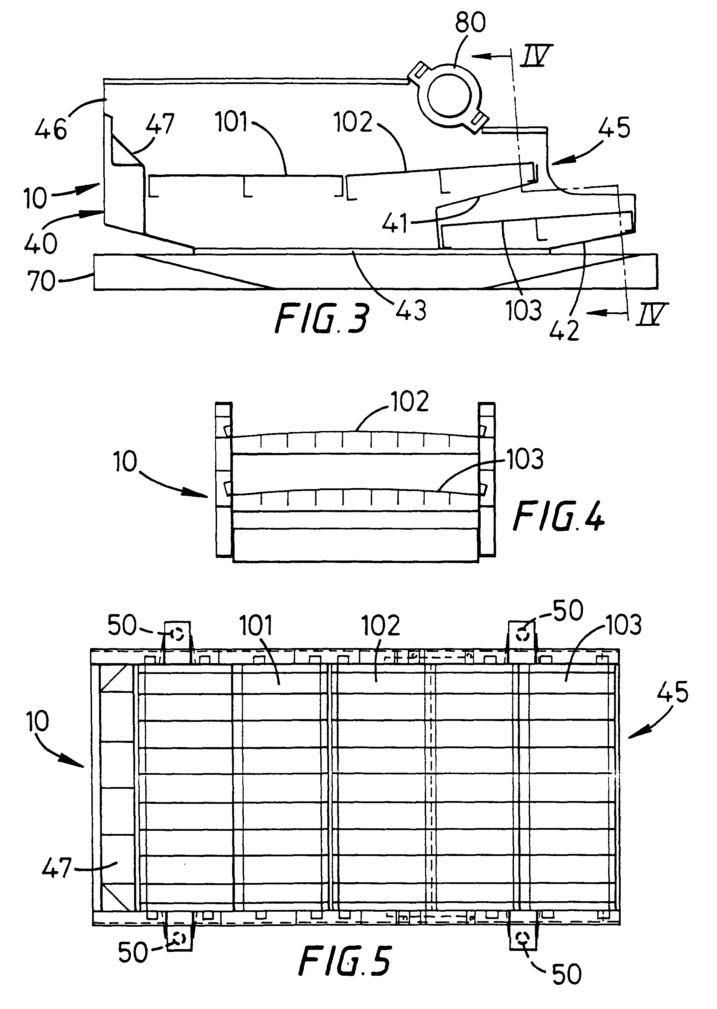

Referring to Figures 1 and 2, a shale shaker 10 has an upper screen support 20 for supporting two upper screens 101, 102 (shown in Figures 3 to 5) and a lower screen support 30 for supporting a lower screen 103 (shown in Figures 3 to 5). The upper screen support 20 and lower screen support 30 are fixed in a basket 40. The basket 40 is mounted on springs 50 which are supported by a frame 60 which is mounted to a base 70. A vibrating apparatus 80 for vibrating the screens 101, 102, 103 is mounted on the basket 40.

As shown in Figure 1, the lower screen support 30 comprises longitudinal cross beams 31, transverse cross beams 32 and an outer frame 33 surrounding the cross beams. The lower screen support 30 is inclined upwardly towards the mouth 45 of the shale shaker 10.

The upper screen support comprises a first section 24 and a second section 25. The first and second sections 24, 25 are each similar in construction to the lower support 30. The first section 24 lies horizontally while the second section 25 is inclined upwardly towards mouth 45 of the shale shaker 10. Fifty percent of the lower screen support underlies the upper screen support.

Referring now to Figure 3, the basket 40 also comprises a flow back pan 41 which is disposed between the upper screen support 20 and the lower screen support 30. Another flow back pan 42 is disposed adjacent the lower screen support 30.

The basket 40 also comprises a feed opening 46 and a deflector plate 47. An opening 43 beneath the upper and lower screen supports 20, 30 leads to a sump.

The vibrating apparatus 80 is of a known type which generally comprises a motor and an eccentric load.

The screens 101, 102, 103 in Figures 3 to 5 are shown schematically for simplicity. The upper screens 101, 102 are, however, provided with course mesh while finer mesh is provided on the lower screen 103. In a second embodiment (not shown) the upper and lower screens 101, 102, 103 comprise at least one three-dimensional screen having a "hill and valley" surface. The "hills" may extend from one end of the screen to the other in the same general direction as the movement of solids along the top of the screen. Alternatively the "hills" may extend transverse to this direction of movement. If desired, only a portion of the three dimensional screen is undulant and the remainder is flat. In a third embodiment (not shown) the basket 40 may be tilted by 5°.

Before use, the upper and lower screens 101, 102, 103 are fitted into the shale shaker 10. The vibrating apparatus 80 is continually vibrating screens 101, 102, 103 during the below described operations.

When the shale shaker is in normal operation, the material to be separated (generally a mixture of drilling mud and stone chips), enters the shale shaker 10 through feed opening 46. The material to be separated drops on to deflector 47 and travels along upper screens 101 and 102. Liquid and small particles of the material to be separated fall through the mesh 101, 102 while the larger particles remain on the screens 101, 102. The flow back pan 41 prevents the liquid and small particles which pass through the upper screen 102 falling onto the lower screen 103 and guides the material into a sump. The larger particles are vibrated towards the mouth 45 end of the basket 40 where they drop onto the lower screen 103 and subsequently fall out of the mouth 45 onto a waste conveyor or into a skip. In normal operation little or no drilling mud reaches the lower screen 103.

During surges, i.e. periods in which the input of mud is temporarily increased, or the amount of solids in the mud is temporarily increased, the material to be separated enters the shale shaker 10 through feed opening 46. Whereas during normal operation substantially all the mud is separated from the solids during passage across the upper screens 101, 102 when there is a surge a significant quantity of drilling mud flows onto the lower screen 103 together with the solids and is screened thereon. The flow back pan 42 guides the liquid into the sump.

The larger particles vibrate along the screen 103 towards the mouth 45 of the shale shaker 10 where they exit onto a waste conveyor or into a skip.

## Claims

1. An assembly for vibrating screens, said assembly comprising a base (70), a basket (40) mounted on said base (70) and movable with respect thereto, apparatus (80) for vibrating said basket (40), a sump below the basket (40), an upper screen support (20) and a lower screen support (30) wherein a portion of the lower screen support (30) underlies the upper screen support (20), characterised in that a flow back pan (41) is disposed between the upper screen support (20) and the lower screen support (30) so that, in use, an upper screen mounted on said upper screen support (20) discharges on to a lower screen (103) mounted on said lower screen support whilst said flow back pan (41) prevents material which passes through the upper screen (101, 102) from contacting the lower screen (103) and directs said material into said sump.

2. An assembly as claimed in Claim 1, wherein at least 10% and no more than 60% of the lower screen support (30) underlies the upper screen support (20).

3. An assembly as claimed in Claim 1, wherein about 50% of the lower screen support (30) underlies the upper screen support (20).

4. An assembly as claimed in any of Claims 1, 2 or 3, including an upper screen (101, 102) on said upper screen support (20) and a lower screen (103) on said lower screen support (30).

5. An assembly as claimed in Claim 4, wherein said upper screen (101, 102) and said lower screen (103) are fabricated from different materials.

6. An assembly as claimed in Claim 4 or 5, wherein the upper screen (101, 102) has a screening material of a first mesh size and said lower screen (103) has a screening material with a mesh size finer than that of the screening material of said upper screen (101, 102).

7. An assembly as claimed in Claim 4, 5 or 6, wherein all the screens (101, 102, 103) are the same size.

8. An assembly as claimed in any of Claims 4 to 7, wherein at least one screen (101, 102, 103) is a three-dimensional screen.

9. An assembly as claimed in any of Claims 4 to 8, wherein a portion of said lower screen (103) underlies said upper screen (101, 102).

10. An assembly as claimed in Claim 9, wherein at least 10% and no more than 60% of said lower screen (103) underlies said upper screen (101, 102).

11. An assembly as claimed in Claim 10, wherein about 50% of said lower screen (103) underlies said upper screen (101, 102).

12. An assembly as claimed in any preceding claim, further comprising a flow back pan (42) disposed adjacent the lower screen support (30) for directing material which passes through said lower screen (103) into said bottom sump.

13. An assembly as claimed in any preceding claim, wherein said upper screen support (20) is arranged to support at least two screens (101, 102) disposed end to end.

14. An assembly as claimed in Claim 13, wherein said upper screen support (20) is arranged to support said two screens (101, 102) at converging angles with respect to each other.

15. An assembly as claimed in any preceding claim, wherein said lower screen support (30) is arranged to support at least two screens (not shown) disposed end to end.

## Patentansprüche

1. Baueinheit zum Versetzen von Sieben in Schwingungen, wobei die Baueinheit eine Grundplatte (70), einen Korb (40), der an der Grundplatte (70) angebracht und in bezug darauf beweglich ist, eine Vorrichtung (80) zum Versetzen des Korbs (40) in Schwingungen, einen Sammelbehälter unter dem Korb (40), einen oberen Siebträger (20) und einen unteren Siebträger (30) umfaßt, wobei ein Abschnitt des unteren Siebträgers (30) unter dem oberen Siebträger (20) liegt, dadurch gekennzeichnet, daß zwischen dem oberen Siebträger (20) und dem unteren Siebträger (30) ein Rückflußkasten (41) so angeordnet ist, daß sich im Gebrauch ein am oberen Siebträger (20) angebrachtes oberes Sieb auf ein am unteren Siebträger angebrachtes unteres Sieb (103) entlädt, wobei der Rückflußkasten (41) verhindert, daß Material, das sich durch das obere Sieb (101, 102) bewegt, mit dem unteren Sieb (103) in Kontakt gelangt, und das Material in den Sammelbehälter lenkt.

2. Baueinheit nach Anspruch 1, bei der wenigstens 10 % und nicht mehr als 60 % des unteren Siebträgers (30) unter dem oberen Siebträger (20) liegen.

3. Baueinheit nach Anspruch 1, bei der ungefähr 50 % des unteren Siebträgers (30) unter dem oberen Siebträger (20) liegen.

4. Baueinheit nach einem der Ansprüche 1, 2 oder 3, die ein oberes Sieb (101, 102) am oberen Siebträger (20) und ein unteres Sieb (103) am unteren Siebträger (30) umfaßt.

5. Baueinheit nach Anspruch 4, bei der das obere Sieb (101, 102) und das untere Sieb (103) aus verschiedenen Werkstoffen hergestellt sind.

6. Baueinheit nach Anspruch 4 oder 5, bei der das obere Sieb (101, 102) ein Siebungsmaterial einer ersten Maschengröße besitzt und das untere Sieb (103) ein Siebungsmaterial mit einer feineren Maschengröße als diejenige des Siebungsmaterials des oberen Siebs (101, 102) besitzt.

7. Baueinheit nach Anspruch 4, 5 oder 6, bei der sämtliche Siebe (101, 102, 103) die gleiche Größe besitzen.

8. Baueinheit nach einem der Ansprüche 4 bis 7, bei der wenigstens ein Sieb (101, 102, 103) ein dreidimensionales Sieb ist.

9. Baueinheit nach einem der Ansprüche 4 bis 8, bei der ein Abschnitt des unteren Siebs (103) unter dem oberen Sieb (101, 102) liegt.

10. Baueinheit nach Anspruch 9, bei der wenigstens 10 % und nicht mehr als 60 % des unteren Siebs (103) unter dem oberen Sieb (101, 102) liegen.

11. Baueinheit nach Anspruch 10, bei der ungefähr 50 % des unteren Siebs (103) unter dem oberen Sieb (101, 102) liegen.

12. Baueinheit nach einem vorhergehenden Anspruch, ferner mit einem Rückflußkasten (42), der in der Nähe des unteren Siebträgers (30) angeordnet ist, um Material, das sich durch das untere Sieb (103) bewegt, in den unteren Sammelbehälter zu lenken.

13. Baueinheit nach einem vorhergehenden Anspruch, bei der der obere Siebträger (20) so beschaffen ist, daß er wenigstens zwei Siebe (101, 102), die Ende an Ende angeordnet sind, trägt.

14. Baueinheit nach Anspruch 13, bei der der obere Siebträger (20) so beschaffen ist, daß er die beiden Siebe (101, 102) unter zusammenlaufenden Winkeln trägt.

15. Baueinheit nach einem vorhergehenden Anspruch, bei der der untere Siebträger (30) so beschaffen ist, daß er wenigstens zwei (nicht gezeigte) Siebe, die Ende an Ende angeordnet sind, trägt.

## Revendications

1. Dispositif pour tamis vibrants, ledit dispositif comprenant une base (70), un panier (40) fixé sur ladite base (70) et pouvant se déplacer par rapport à lui, un appareil (80) servant à faire vibrer ledit panier (40), un bac de réception étant placé au-dessous du panier (40), un support de tamis supérieur (20) et un support de tamis inférieur (30) dans lequel une partie du support de tamis inférieur (30) repose au-dessous du support de tamis supérieur (20), caractérisé en ce qu'un plateau de reflux (41) est disposé entre le support de tamis supérieur (20) et le support de tamis inférieur (30) de sorte que, en fonctionnement, un tamis supérieur monté sur ledit support de tamis supérieur (20) se décharge sur un tamis inférieur (103) monté sur ledit support de tamis inférieur tandis que ledit plateau de reflux (41) empêche le matériau qui traverse le tamis supérieur (101, 102) de se trouver en contact avec le tamis inférieur (103) et dirige ledit matériau dans ledit bac de réception.

2. Dispositif selon la revendication 1, dans lequel au moins 10% et pas plus de 60% du support de tamis inférieur (30) repose au-dessous du support de tamis supérieur (20).

3. Dispositif selon la revendication 1, dans lequel environ 50% du support de tamis inférieur (30) repose sous le support de tamis supérieur (20).

4. Dispositif selon l'une quelconque des revendications 1, 2 ou 3 comportant un tamis supérieur (101, 102) sur ledit support de tamis supérieur (20) et un tamis inférieur (103) sur ledit support de tamis inférieur (30).

5. Dispositif selon la revendication 4, dans lequel ledit tamis supérieur (101, 102) et ledit tamis inférieur (103) sont fabriqués à partir de matériaux différents.

6. Dispositif selon la revendication 4 ou 5, dans lequel le tamis supérieur (101, 102) est constitué d'un matériau de tamisage ayant une première dimension de maille et ledit tamis inférieur (103) est constitué d'un matériau de tamisage ayant une dimension de maille plus petite que celle du matériau de tamisage dudit tamis supérieur (101, 102).

7. Dispositif selon la revendication 4, 5 ou 6, dans lequel tous les tamis (101, 102, 103) sont de la même dimension.

8. Dispositif selon l'une quelconque des revendications 4 à 7, dans lequel au moins un tamis (101, 102, 103) est un tamis à trois dimensions.

9. Dispositif selon l'une quelconque des revendications 4 à 8, dans lequel une partie dudit tamis inférieur (103) repose sous ledit tamis supérieur (101, 102).

10. Dispositif selon la revendication 9, dans lequel au moins 10% et pas plus de 60% dudit tamis inférieur (103) repose sous ledit tamis supérieur (101, 102).

11. Dispositif selon la revendication 10, dans lequel environ 50% dudit tamis inférieur (103) repose sous ledit tamis supérieur (101, 102).

12. Dispositif selon l'une quelconque des revendications précédentes, comprenant, de plus, un plateau de reflux (42) disposé de façon adjacente au support de tamis inférieur (30) pour diriger un matériau qui traverse ledit tamis inférieur (103) dans ledit bac de réception inférieur.

13. Dispositif selon l'une quelconque des revendications précédentes, dans lequel ledit support de tamis supérieur (20) est disposé pour supporter au moins deux tamis (101, 102) disposés bout à bout.

14. Dispositif selon la revendication 13, dans lequel ledit support de tamis supérieur (20) est disposé pour supporter lesdits deux tamis (101, 102) suivant des angles convergents l'un par rapport à l'autre.

15. Dispositif selon l'une quelconque des revendications précédentes, dans lequel ledit support de tamis inférieur (30) est disposé pour supporter au moins deux tamis (non représentés) disposés bout à bout.
